# EUROPEAN PATENT SPECIFICATION

(11) **EP 0 718 129 B1**
(45) Date of publication and mention of the grant of the patent: **03.03.1999**
(21) Application number: 95118842.4
(22) Date of filing: 30.11.1995
(51) Int. Cl.: B60G 3/14

(54) **A rear suspension with a straight supporting longitudinal bracket**
Hinterradaufhängung mit einem geraden Längslenker
Suspension arrière à bras longitudinal rectiligne

(30) Priority: 19.12.1994 IT TO941033
(43) Date of publication of application: 26.06.1996
(73) Proprietor: FIAT AUTO S.p.A., 10135 Torino (IT)
(72) Inventor: Nargiso, Matteo, I-71011 Apricean (FG) (IT)
(74) Representative: Di Francesco, Gianni

(56) References cited:
- EP-A- 0 028 692
- EP-A- 0 538 116
- DE-A- 3 900 336
- DE-A- 3 912 520
- FR-A- 2 202 791
- US-A- 4 392 667

## Description

The present invention relates to an automobile rear suspension of the kind wherein a bracket supporting the wheel knuckle is provided substantially parallel to the longitudinal axis of the vehicle.

This kind of suspension, while being advantageous in having small overall dimensions, provides no or negligible camber variation, as the kinematic features of the suspension are only dependant on the axis of rotation of the pivotal point of the bracket.

Therefore, no active kind of control can be performed without modifying the suspension structure radically.

An object of the present invention is to provide a rear suspension of the type diclosed in the US-A-4 392 667, which can overcome the cited drawback, allowing wheel camber variation in asymmetrical operational conditions.

It is a further object of the present invention to couple the camber variation to a toe-in variation, still during asymmetrical operational conditions.

In accordance with the invention, these and further objects are accomplished by the provision of a motorcar rear suspension as claimed in claim 1.

For a better understanding of the present invention, reference is made to the following detailed description of a preferred embodiment considered in combination with the accompanying drawings in which:

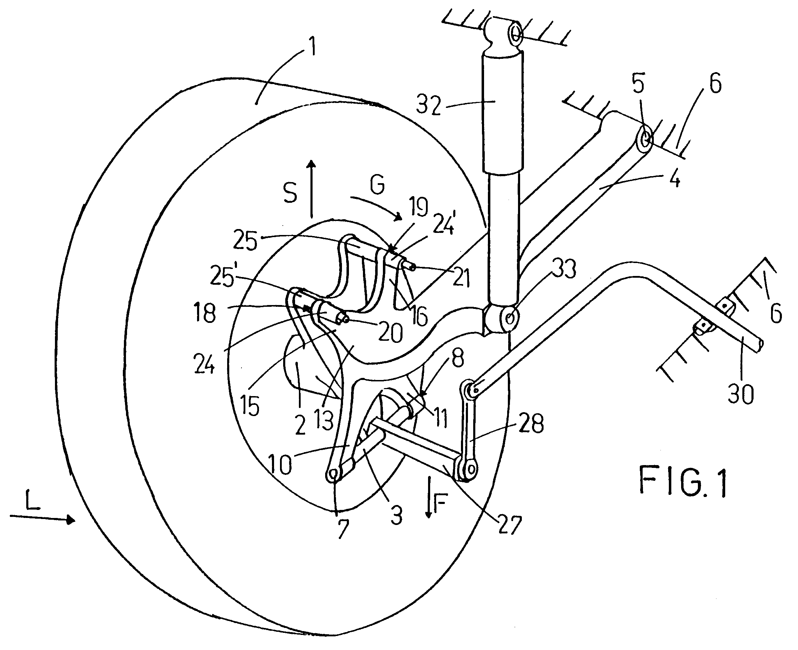

FIG. 1 illustrates schematically a suspension in accordance with the present invention;
FIG. 2 is a schematically shows a second embodiment of the suspension according to this invention.

With reference to the drawings, numeral 1 designates a motorcar rear wheel supported by a knuckle 2.

Integral to the lower end portion of the knuckle 2 is a rotary axle 3 through which the knuckle is linked to a suspension bracket 4. Bracket 4 is in turn connected to the vehicle body 6 through a pin joint 5. Axle 3 is parallel to the longitudinal axis of the vehicle and is disposed underneath the axle of the wheel 1. Axle 3 is inserted for rotation in seats 7 and 8 obtained in two first appendixes 10 and 11 extending radially towards the ground from the free end 13 of suspension bracket 4. Optionally, seats 7 and 8 may be fitted with known means adapted for facilitating rotation of axle 3 and so reduce friction.

The end 13 of bracket 4 provides two further appendixes 15 and 16 which are bifurcating and disposed in a diametrically opposite direction with respect to the first ones. Said appendixes 15 and 16 are adapted for receiving in seats 18 and 19 two respective pins 20 and 21 carried by the upper end of the knuckle 2. Coupled to pins 20 and 21 are two pairs of preloaded compressed elastic members 24, 25' and 24', 25, adapted for controlling alternate motion of pins 20 and 21 in seats 18 and 19 due to rotary motion of knuckle 2 about rotary axle 3.

A rod 27 being perpendicular to and integral with the rotary axle 3 and the knuckle 2 is linked to one end of a torsion bar 30 anchored to the vehicle body 6. The other end of torsion bar 30 is similarly connected to the knuckle of the other rear wheel (not shown).

One end of a shock absorber 32 connects at 33 to bracket 4, the other end being fixed to the vehicle body 6.

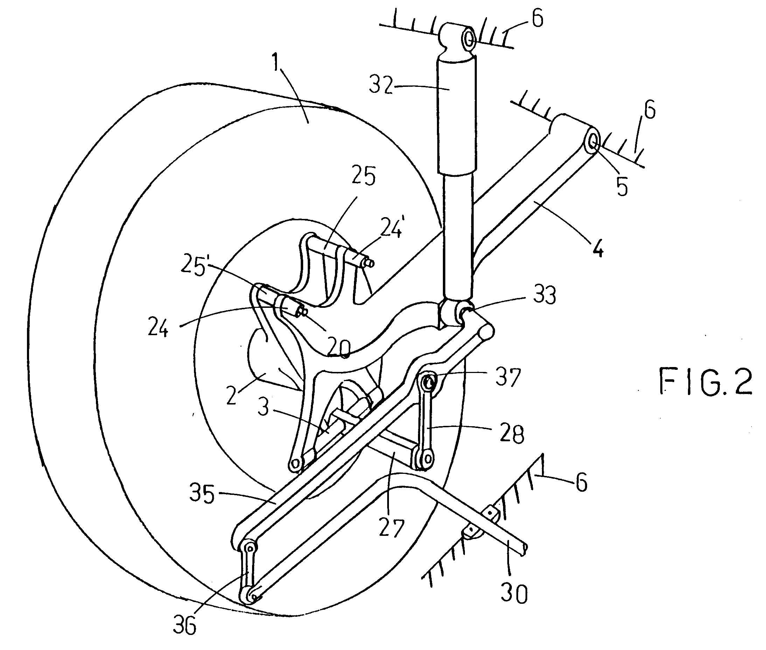

According to a second embodiment shown in FIG. 2, a force amplifying arm 35 is provided parallel to bracket 4. Arm 35 has one end pivotally mounted at 33 to shock absorber 32. The other end of arm 35 connects to stabiliser bar 30 through a second connecting rod 36, while the first connecting rod 28 is linked at a point 37, the position of which is predetermined according to the desired lever arm, proximate to the fulcrum at point 33.

Operation of the suspension according to the invention is as follows.

Upon symmetrical oscillation occurring at the rear wheels, for example on a bump in the road, the elastic preloaded members 24, 25' and 24', 25 prevent rotation of knuckle 2 about its axle 3 as the anti-roll bar and the force amplifying arm (for the second embodiment) provide no force capable of moving rod 27 through connecting rod 28. In fact, all of the members of the suspension move in the same direction for either wheel, so that both of the ends of the stabiliser bar 30 are rotated in the same direction.

On the contrary, with asymmetrical oscillation occurring, i.e. in a bend, when one of the wheels is approaching its end of stroke and the other is bouncing back, the stabiliser bar transmits a force F. Force F and the wheel thrust S tend to give the knuckle 2 a rotary motion G about axle 3 resisting and overcoming the biasing action of compressed elastic members 25, 25' and the action of the side force L. The other elastic members 24, 24' in this case serve to dampen the return stroke of the knuckle 2.

In this way a camber variation is attained during oscillation.

The suspension arrangement in accordance with the present invention also provides for an additional toe-in variation, still during oscillation, by simply disposing the axle 3 slanting relative to the vertical plane. This last effect is then amplified by further rotation of the axle owing to the rotation of suspension bracket 4.

## Claims

1. A motorcar rear wheel suspension of the kind comprising a wheel knuckle supporting bracket (4) substantially parallel to the longitudinal axis of the vehicle, said bracket (4) being connected to the vehicle body (6) by a pin joint, a shock absorbing member (32) interposed between said bracket (4) and the vehicle body (6), and a knuckle (2) supporting the wheel (1), said knuckle (2) being linked to the bracket (4) through a rotary axle (3) integral therewith and substantially parallel to the longitudinal axis of the vehicle, said knuckle being connected by known means (27, 28, 35, 36) to one end of a torsion bar (30), characterised in that
elastic means (24, 25, 24', 25') are disposed between the knuckle (2) and the portion of the bracket (4) facing the knuckle,
and in that said connecting means comprises a rod (27) rigidly connected at one end to the knuckle and arranged substantially perpendicular to the rotary axle (3) and connected at the other end to one end of the torsion bar (30), the other end of the torsion bar (30) being similarly connected to the knucle of the other rear wheel.

2. A suspension as claimed in claim 1, characterised in that said connecting means further comprise a force amplifying arm (35) having one end connected to the suspension bracket, and a second rod (36) for linking the other end of the amplifying arm (35) with said torsion bar (30); a connecting rod (28) being linked between said rod (27) rigidly connected at one end to the knuckle and a point located between the two ends of the force amplifying arm (35).

3. A suspension as claimed in claim 1, characterised in that said rotary axle (3) is located below the axle of the wheel (1).

4. A suspension as claimed in claim 1, characterised in that said rotary axle (3) is slanting with respect to a vertical plane.

## Patentansprüche

1. Eine Hinterradaufhängung eines Kraftwagens von der Art, die umfaßt: einen Lenker (4), der das Radgelenk unterstützt, sich im wesentlich parallel zu der Längsachse des Wagens erstreckt, und durch ein Bolzengelenk mit der Karosserie (6) verbunden ist; ein stoßdämpfendes Glied (32) zwischen dem Lenker und der Karosserie (6); ein das Rad (1) unterstützendes Gelenk (2), das durch einen mit dem Lenker (4) einstückigen Drehbolzen (3) mit diesem verbunden ist und sich im wesentlichen parallel zur Längsachse des Wagens erstreckt, wobei das Gelenk durch bekannte Einrichtungen (27, 28, 35, 36) mit einein Ende einer Torsionsfeder (30) verbunden ist,
**dadurch gekennzeichnet, daß** eine elastische Vorrichtung (24, 25, 24', 25') zwischen dem Gelenk (2) und dem dem Gelenk gegenüberliegenden Teil des Lenkers (4) angeordnet ist, und daß die Verbindungs-Einrichtungen eine Stange (27) umfassen, die an einem Ende mit dem Gelenk starr verbunden und im wesentlichen senkrecht zu dem Drehbolzen (3) angeordnet ist, und deren anderes Ende mit einem Ende der Torsionfeder (30) verbunden ist, wobei das andere Ende der Torsionfeder (30) auf ähnliche Weise mit dem Gelenk des anderen Hinterrades verbunden ist.

2. Eine Aufhängung wie in Anspruch 1 beansprucht,
**dadurch gekennzeichnet, daß** die Verbindungs-Einrichtungen weiterhin einen kraftverstärkenden Arm (35) umfassen, dessen eines Ende mit dem Lenker verbunden ist, sowie eine zweite Stange (36), die das andere Ende des kraftverstärkenden Arms (35) mit genannter Torsionsfeder (30) verbindet, wobei eine Verbindungsstange (28) die besagte Stange (37), die an einem Ende Starr mit dem Gelenk verbunden ist, mit einem Punkt zwischen beiden Enden des kraftverstärkenden Arms (35) verbindet.

3. Eine Aufhängung wie in Anspruch 1 beansprucht,
**dadurch gekennzeichnet, daß** der Drehbolzen (3) unterhalb der Achse des Rads (1) angeordnet ist.

4. Eine Aufhängung wie in Anspruch 1 beansprucht,
**dadurch gekennzeichnet, daß** der Drehbolzen (1) zu einer senkrechten Ebene geneigt verläuft.

## Revendications

1. Suspension de roue arrière d'automobile, du type comprenant une patte de support de cardan de roue (4) sensiblement parallèle à l'axe longitudinal du véhicule, la dite patte (4) étant raccordée à la carrosserie (6) de l'automobile par l'intermédiaire d'une articulation à tourillon, un élément absorbeur de choc (32) étant interposé entre la dite patte (4) et la carrosserie (6) de l'automobile, et un cardan (2) supportant la roue (1), le dit cardan (2) étant relié à la patte (4) par l'intermédiaire d'un essieu tournant (3) formé d'un seul tenant avec elle et sensiblement parallèle à l'axe longitudinal du véhicule, la dite patte étant reliée par des moyens connus (27, 28, 35, 36) à une première extrémité d'une barre de torsion (30), caractérisée en ce que
des moyens élastiques (24, 25, 24', 25') sont disposés entre le cardan (2) et la partie du bras (4) qui est tournée vers le cardan,
et en ce que les dits moyens de raccordement comprennent une tige (27) qui est raccordée de manière rigide, par une première extrémité, au cardan, et qui est disposée de manière sensiblement perpendiculaire à l'essieu tournant (3), en étant raccordée, par l'autre extrémité, à une première extrémité de la barre de torsion (30), l'autre extrémité de la barre de torsion (30) étant similairement raccordée au cardan de l'autre roue arrière.

2. Suspension selon la revendication 1, caractérisée en ce que les dits moyens de raccordement comprennent, en outre, un bras amplificateur de force (35) comportant une première extrémité raccordée à la patte de la suspension, et une seconde tige (36) qui est destinée à lier l'autre extrémité du bras amplificateur (35) à la dite barre de torsion (30); une tige de raccordement (28) étant reliée entre la dite tige (27) qui est raccordée de manière rigide, par une première extrémité, au cardan, et un point situé entre les deux extrémités du bras amplificateur de force (35).

3. Suspension selon la revendication 1, caractérisée en ce que le dit essieu tournant (3) est situé au-dessous de l'essieu de la roue (1).

4. Suspension selon la revendication 1, caractérisée en ce que le dit essieu tournant (3) est incliné par rapport à un plan vertical.
